# EUROPEAN PATENT APPLICATION

(11) **EP 3 944 118 A1**
(43) Date of publication of application: **26.01.2022**
(21) Application number: 20782210.7
(22) Date of filing: 27.03.2020
(51) Int. Cl.: G06F 21/88, G06F 21/86, H04L 29/08

(54) **SYSTEM AND METHOD FOR REMOTE CONTROL OF EXTERNAL DATA STORAGE DEVICE**

(30) Priority: 05.04.2019 KR 20190040065
(71) Applicant: Data Locker Inc., Goyang-si, Gyeonggi-do 10401 (KR)
(72) Inventor: KIM, Jeong Ki, Goyang-si Gyeonggi-do 10551 (KR)
(74) Representative: Isarpatent
(86) International application number: PCT/KR2020/004175
(87) International publication number: WO 2020/204477

(57) **Abstract**

Disclosed are a system and method for remote control of an external data storage device. The system consists of: an external data storage device which is connected to a host device so as to provide a data storage function; and a remote control server which remotely controls the external data storage device so as to set a lock for limiting reading, storage, and deletion of data in the external data storage device, or to delete the data from the external data storage device. The aforementioned system and method for remote control of an external data storage device are configured to, even if the external data storage device is stolen or lost, forbid access to data in the external data storage device or completely delete the data by means of the remote control, thereby having an effect of preventing a leak of personal information or important data. In particular, the system and method can remotely access, by means of narrowband-Internet-of-Things communication, an external data storage device which is several kilometers away, and have an effect of enabling position tracking as a GPS function is added to the external data storage device.

## Description

### [Technical Field]

The present invention relates to a remote control system and method, and to a system and method for remote control of an external data storage device.

### [Background Art]

An external data storage device is used by being connected to a host device such as a computer and a laptop and provides a function as an auxiliary storage device.

The external data storage device is composed of a hard disk, a memory disk, and the like.

The external data storage device is very convenient in that a large amount of data may be easily moved offline because the external data storage device guarantees mobility as well as additionally secures insufficient memory capacity on the host device.

However, there is a concern that the external data storage device may be easily stolen or lost.

When the external data storage device is stolen or lost, data is leaked or damaged, thereby seriously affecting security.

The external data storage device that is lost or stolen is very difficult to find, and when critical personal information is leaked or important data is exposed, there is a problem that it may not be recovered.

### [Related Art Literature]

### [Patent Literature]

(Patent Document 1) Korean Patent No. 10-2016-0026024

(Patent Document 2) Korean Patent No. 10-2011-0083889

### [Disclosure]

### [Technical Problem]

An object of the present invention is to provide a remote control system of an external data storage device.

Another object of the present invention is to provide a remote control method of an external data storage device.

### [Technical Solution]

A remote control system of an external data storage device according to an object of the present invention described above may be configured to include: an external data storage device that is connected to a host device to provide a data storage function; and a remote control server that remotely controls the external data storage device to set a lock that limits reading, storage, and deletion of data of the external data storage device, or deletes the data from the external data storage device.

Here, the remote control system may be configured to further include a user terminal that transmits a user input value for remote control of the remote control server to the remote control server in real time.

In addition, the external data storage device may be configured to include: a host interface that receives a host command from the host device to perform interfacing with the host device; a narrow band-Internet of Things (NB-IoT) module that receives a remote control command for lock setting or data deletion from the remote control server; a storage disk in which data is stored; a disk controller that performs setting a lock that limits reading, storage, and deletion of the data stored in the storage disk or data deletion according to the host command received through the host interface or the remote control command received through the NB-IoT module; a battery module for supplying power; and a control module that performs control according to the remote control command received from the NB-IoT module.

In addition, the remote control system may be configured to further include a global positioning system (GPS) module that calculates position information of the external data storage device in real time.

In addition, the NB-IoT module may be configured to transmit the real-time position information calculated by the GPS module to the remote control server.

A remote control method of an external data storage device according to another object of the present invention may be configured to include: transmitting a user input value for remote control of a remote control server to the remote control server in real time by a user terminal; remotely controlling the external data storage device according to the user input value by the remote control server; and setting a lock that limits reading, storage, and deletion of data according to the remote control of the remote control server, or deleting the data of the external data storage device by the external data storage device.

Here, the setting of a lock that limits reading, storage, and deletion of data according to the remote control of the remote control server, or the deleting of the data of the external data storage device by the external data storage device may be configured so that a narrow band-Internet of Things (NB-IoT) module receives a remote control command for setting a lock or data deletion from the remote control server, and a disk controller performs reading, storage, and deletion of data stored in a storage disk according to the remote control command received through the NB-IoT module.

In addition, the remote control method may be configured to further include: calculating position information of the external data storage device in real time by a global positioning system (GPS) module; transmitting the real-time position information calculated by the GPS module to the remote control server by the NB-IoT module; and receiving the real-time position information and transmitting it to the user terminal in real time by the remote control server.

### [Advantageous Effects]

According to a remote control system and method of the external data storage device described above, even if the external data storage device is stolen or lost, the remote control system 100 is configured to forbid access to data of the external data storage device or completely delete the data by remote control, and accordingly, there is an effect capable of preventing a leak of personal information or important data.

In particular, there is an effect capable of remotely accessing the external data storage device that is several kilometers away through narrow-band-Internet of Things communication, and enabling position tracking by adding a GPS function to the external data storage device.

### [Description of Drawings]

FIG. 1 is a block diagram of a remote control system of an external data storage device according to an embodiment of the present invention.
FIG. 2 is a flowchart of a remote control method of the external data storage device according to the embodiment of the present invention.

[Description of Reference Numerals]

- 110:: External data storage device
- 111:: Storage disk
- 112:: Disk controller
- 113:: Host interface
- 114:: Battery module
- 115:: Narrow band-Internet of Things module
- 116:: GPS module
- 117:: Control module
- 120:: Remote control server
- 121:: Narrow band-Internet of Things module
- 122:: External data storage device status information monitoring module
- 123:: External data storage device status information transmission module
- 124:: User input receiving module
- 125:: Remote control command generation module
- 126:: Control module
- 130:: User terminal.

### [Modes of the Invention]

The present invention may be subjected to various modifications and may have several embodiments, and thus specific embodiments thereof will be illustrated in the drawings and described in specific contents for carrying out the invention in detail. However, there is no intent to limit the present invention to specific embodiments, and it should be understood to include all modifications, equivalents, or alternatives that fall in the spirit and scope of the present invention. In describing each drawing, similar reference numerals are used for similar components.

The terms such as first, second, A, and B may be used to describe various elements, but the elements should not be limited by the terms. The terms are used only for distinguishing one element from other components. For example, the first element may be referred to as the second element without departing from the scope of the present invention, and similarly, the second element may be referred to as the first element. The terms and/or include a combination of a plurality of related entries or one of a plurality of related entries.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terms used in this application are only used to describe specific embodiments, and are not intended to limit the present invention. A singular expression includes a plural expression unless the context clearly refers to otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless defined otherwise, all terms used herein, including technical or scientific terms, have the same meaning as commonly understood by a person skilled in the art to which the present invention pertains. Terms such as those defined in a commonly used dictionaries should be interpreted as having a meaning that is consistent with their meaning in the context of the relevant art and are not interpreted as ideal or excessively formal meanings unless expressly defined in this application.

Hereinafter, preferred embodiments of the present invention will be described in detail with reference to the accompanying drawings.

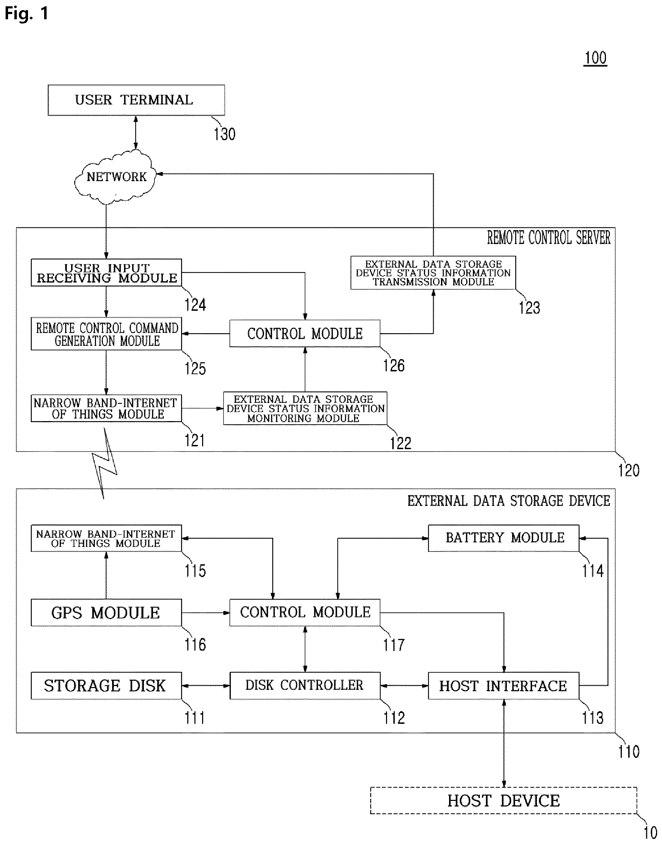

FIG. 1 is a block diagram of a remote control system of an external data storage device according to an embodiment of the present invention.

Referring to FIG. 1, a remote control system 100 of an external data storage device according to an embodiment of the present invention may be configured to include an external data storage device 110, a remote control server 120, and a user terminal 130.

Even if the external data storage device 110 is stolen or lost, the remote control system 100 of the external data storage device is configured to forbid access to data of another person's external data storage device 110 or completely delete the data by remote control of a user.

Through a narrow-band-Internet of Things communication, it is possible to remotely access the external data storage device 110 that is several kilometers away, and to track a position of the external data storage device 110 in real time using a global positioning system (GPS).

Hereinafter, a detailed configuration will be described.

The external data storage device 110 is a movable auxiliary storage device composed of a hard disk or a memory.

The external data storage device 110 is used by being connected to a host device 10 such as a computer or a lap top.

The external data storage device 110 may be configured to include a storage disk 111, a disk controller 112, a host interface 113, a battery module 114, a narrow band-Internet of Things (NB-IoT) module 115, a global positioning system (GPS) module 116, and a control module 117.

Hereinafter, a detailed configuration will be described.

The storage disk 111 is a configuration in which data is stored.

The disk controller 112 is a configuration for accessing the storage disk 111.

The disk controller 112 may be configured to access the storage disk 111 according to a host command of the host device 10 for accessing the storage disk 111 or a remote control command of the remote control server 120.

More specifically, the disk controller 112 may be configured so as to perform setting a lock that limits reading, storage, and deletion of data stored in the storage disk 111 or data deletion according to a host command received through the host interface 113 or a remote control command received through the NB-IoT module 115.

When the lock is set, it is possible to prevent unauthorized reading or deletion of data by another person, and when the data is deleted, it is possible to prevent data from being leaked to another person.

The host interface 113 may be configured to receive a host command from the host device 10 to perform interfacing with the host device 10.

The host interface 113 may perform high-speed serial bus communication for connection with the host device 10. The host interface 113 performing the high-speed serial bus communication may receive power from the host device 10.

The battery module 114 is a configuration for supplying power to the external data storage device 110.

Power supplied through the host interface 113 may be charged to the battery module 114.

The NB-IoT module 115 is a configuration for narrow band-Internet of Things communication and may communicate with the remote control server 120.

The NB-IoT module 115 may be configured to support a data transmission speed of 250 kbps or more and a wide area service of 10 km or more in a narrow frequency band. The NB-IoT module 115 has advantages of low data usage and low power consumption.

The NB-IoT module 115 may be configured to receive a remote control command for setting a lock or deleting data from the remote control server 120.

The GPS module 116 may be configured to receive a GPS satellite signal to calculate real-time position information of the external data storage device 110.

The NB-IoT module 115 may be configured to transmit the real-time position information calculated by the GPS module 116 to the remote control server 120.

The control module 117 may control the overall operation of the external data storage device 110.

The control module 117 may be configured to perform control according to a remote control command received from the NB-IoT module 115 as well as a host command received from the host interface 113.

The control module 117 may be basically configured to block the host command when a remote control command is input during controlling according to the host command and perform control according to the remote control command. That is, when it is recognized that a loss or blocking is detected by the remote control command, the control according to the host command may be stopped.

The control module 117 may be configured to block the host device 10 from accessing data stored in the storage disk 111 by itself according to the remote control command. That is, it is possible to set a lock so as to prevent the data from being read, stored, or deleted.

In addition, the control module 117 may completely delete the data stored in the storage disk 111 according to the remote control command to prevent recovery.

Meanwhile, when it is recognized that the loss or blocking is detected by the remote control command, the control module 117 may be configured to periodically check a battery residual capacity of the battery module 114.

In addition, the control module 117 may control the battery module 114 to operate in a power saving mode. When the battery residual capacity is completely exhausted in a stolen or lost state, position tracking may not be performed, and thus the control module 117 may be configured to operate in the power saving mode.

When the battery residual capacity of the battery module 114 is small, the control module 117 may perform power-off by blocking the power supply of the battery module 114. In addition, a process of periodically performing power-on to calculate real-time position information by GPS, transmitting, and then performing power-off may be repeated.

The control module 117 may be configured to periodically transmit battery residual capacity information to the remote control server 120 through the NB-IoT module 115.

On the other hand, the control module 117 may be configured to record host command history of the host device 10 in real time.

Here, the host command history may be a record of access to specific data, and when the host device 10 can be recognized, a host name or a host ID of the host device 10 may also be recorded.

When theft or loss is recognized, the control module 117 may be configured to extract a series of host command history before the theft or loss is recognized, and to transmit it in real time to the remote control server 120 through the NB-IoT module 115.

The external data storage device 110 may be configured to further include a Wi-Fi module (not shown). The Wi-Fi module (not shown) automatically attempts Wi-Fi connection in a power-on state, and the control module 117 may be configured to read Wi-Fi access information of Wi-Fi access points connected in the vicinity to transmit the information to the remote control server 120 through the NB-IoT module 115.

Such Wi-Fi access information may serve as a clue to determine the position of the external data storage device 110 even at a position in which GPS reception is not available.

In addition, the control module 117 may be provided with a host information collection program such as a virus program. Such a host information collection program may be configured to be automatically executed when the host device 10 is connected after the external data storage device 110 is set to be lost or stolen.

The host information collection program may be configured to collect various system information such as the host name, the host ID, an IP address, and a MAC address of the host device 10 in real time.

The host system information collected by the host information collection program may be provided to the remote control server 120 through the NB-IoT module 115.

The remote control server 120 is a configuration for remotely controlling the external data storage device 110 when the external data storage device 110 is lost or stolen.

The remote control server 120 may be configured to remotely control the external data storage device 110 according to a user's input to set a lock to forbid access to data or to completely delete the data. Here, only some data may be deleted.

The remote control server 120 may be configured to include a narrow band-Internet of Things (NB-IoT) module 121, an external data storage device status information monitoring module 122, an external data storage device status information transmission module 123, a user input receiving module 124, and a remote control command generation module 125, and a control module 126.

Hereinafter, a detailed configuration will be described.

The NB-IoT module 121 is a configuration that performs narrow band-IoT communication and may directly communicate with the external data storage device 110 or communicate with the external data storage device 110 through a narrow band-IoT access point.

The NB-IoT module 121 may be configured to receive various state information of the external data storage device 110 from the NB-IoT module 115 of the external data storage device 110.

Specifically, the NB-IoT module 121 may be configured to receive real-time position information using the GPS of the external data storage device 110, host command history, battery residual capacity information, a host name or a host ID, Wi-Fi access information, and the like.

Meanwhile, the NB-IoT module 121 may be configured to transmit theft information or loss information and the remote control command to the external data storage device 110 in real time.

On the other hand, the NB-IoT module 121 may be configured to receive the host system information collected by the host information collection program of the external data storage device 110 in real time.

The external data storage device status information monitoring module 122 may be configured to automatically monitor various status information received from the NB-IoT module 121. Here, as described above, the status information may include the real-time position information using GPS, the host command history, the battery level information, the host name or the host ID, the Wi-Fi access information, and the like.

The external data storage device status information transmission module 123 may be configured to transmit external data storage device status information monitored by the external data storage device status information monitoring module 122 to the user terminal 130 in real time.

The external data storage device status information monitoring module 122 may be configured to monitor the host system information collected by the host information collection program and may be configured so that the external data storage device status information transmission module 123 transmits the host system information to the user terminal 130.

The user input receiving module 124 may be configured to receive a user input value from the user terminal 130.

Here, the user input value may be theft information, loss information, data lock setting information, and data deletion information.

The user input receiving module 124 may also receive real-time position information of the user terminal 130.

The remote control command generation module 125 may be configured to generate the remote control command according to a user input value received from the user input receiving module 124. A theft setting command, a loss setting command, a data lock setting command, a data deletion command, and the like may be an example thereof.

The control module 126 is a component for controlling the overall operation of the remote control server 120.

The control module 126 may be configured to compare real-time position information of the user terminal 130 received from the user input receiving module 124 with real-time position information of the external data storage device 110. When the position information of the user terminal 130 and the position information of the external data storage device 110 are close to each other within a predetermined radius, the control module 126 may generate an alarm sound command to transmit it to the external data storage device 110.

The control module 117 of the external data storage device 110 may be configured to output an alarm sound through a speaker (not shown) provided in advance in the external data storage device 110.

The user terminal 130 may be a terminal of a user who has lost or got stolen the external data storage device 110.

The user terminal 130 may be configured to receive and display status information and host system information of the external data storage device 110 from the external data storage device status information transmission module 123.

The user terminal 130 may be configured to receive a user input value for registering the theft or loss in the remote control server 120 to transmit it to the remote control server 120 in real time, and to receive a user input value for remotely controlling the external data storage device 110 to transmit it to the remote control server 120 in real time.

Meanwhile, the user terminal 130 may be configured to transmit the real-time position information of the user terminal to the remote control server 120 in real time.

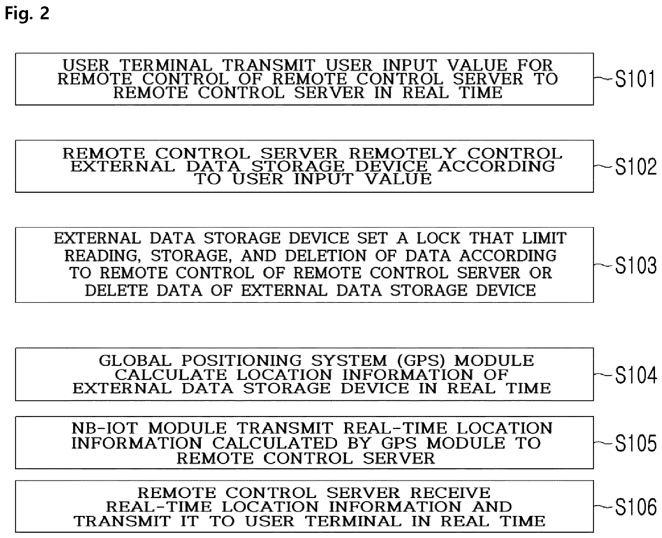

FIG. 2 is a flowchart of a remote control method of the external data storage device according to the embodiment of the present invention.

Referring to FIG. 2, the user terminal 130 transmits a user input value for remote control of the remote control server 120 to the remote control server 120 in real time (S101).

Next, the remote control server 120 remotely controls the external data storage device 110 according to the user input value (S102).

Next, the external data storage device 110 sets a lock to limit reading, storage, and deletion of data according to the remote control of the remote control server 120 or deletes data of the external data storage device 110 (S103).

Here, the narrow band-Internet of Things (NB-IoT) module 115 receives the remote control command for lock setting or data deletion from the remote control server 120, and the disk controller 112 may be configured to perform reading, storage, and deletion of data stored in the storage disk 111 according to the host command received through the NB-IoT module 115.

Next, the global positioning system (GPS) module 116 calculates the position information of the external data storage device 110 in real time (S104).

Next, the NB-IoT module 115 transmits the real-time position information calculated by the GPS module 116 to the remote control server 120 (S105).

Next, the remote control server 120 receives the real-time position information to transmits it to the user terminal 130 in real time (S106).

Although the present invention has been described with reference to the embodiments, those skilled in the art may understand that the present invention may be variously modified and changed within a scope not departing from the spirit and scope of the present invention described in the following claims.

## Claims

1. A remote control system of an external data storage device, the system comprising:
an external data storage device that is connected to a host device to provide a data storage function; and
a remote control server that remotely controls the external data storage device to set a lock that limits reading, storage, and deletion of data of the external data storage device, or deletes the data from the external data storage device.

2. The system of claim 1, further comprising a user terminal that transmits a user input value for remote control of the remote control server to the remote control server in real time.

3. The system of claim 1, wherein the external data storage device includes:
a host interface that receives a host command from the host device to perform interfacing with the host device;
a narrow band-Internet of Things (NB-IoT) module that receives a remote control command for lock setting or data deletion from the remote control server;
a storage disk in which data is stored;
a disk controller that performs setting a lock or deletion of the data stored in the storage disk according to the host command received through the host interface or the remote control command received through the NB-IoT module;
a battery module for supplying power; and
a control module that performs control according to the remote control command received from the NB-IoT module.

4. The system of claim 1, further comprising a global positioning system (GPS) module that calculates position information of the external data storage device in real time.

5. The system of claim 4, wherein the NB-IoT module is configured to transmit the real-time position information calculated by the GPS module to the remote control server.

6. A remote control method of an external data storage device, the method comprising:
transmitting a user input value for remote control of a remote control server to the remote control server in real time by a user terminal;
remotely controlling the external data storage device according to the user input value by the remote control server; and
setting a lock that limits reading, storage, and deletion of data according to the remote control of the remote control server, or deleting the data of the external data storage device by the external data storage device.

7. The method of claim 6, wherein the setting of a lock that limits reading, storage, and deletion of data according to the remote control of the remote control server, or the deleting of the data of the external data storage device by the external data storage device is configured so that a narrow band-Internet of Things (NB-IoT) module receives a remote control command for setting a lock or data deletion from the remote control server, and a disk controller performs reading, storage, and deletion of data stored in a storage disk according to the remote control command received through the NB-IoT module.

8. The method of claim 7, further comprising
calculating position information of the external data storage device in real time by a global positioning system (GPS) module;
transmitting the real-time position information calculated by the GPS module to the remote control server by the NB-IoT module; and
receiving the real-time position information and transmitting it to the user terminal in real time by the remote control server.
